Europäisches Patentamt

**European Patent Office**

Office européen des brevets

(19)

(11) Numéro de publication: **0 032 328**
**B1**

(12) FASCICULE DE BREVET EUROPEEN

(45) Date de publication du fascicule du brevet:
25.05.83

(51) Int. Cl.³: **H 04 B 1/74**

(21) Numéro de dépôt: **80401704.4**

(22) Date de dépôt: **28.11.80**

(54) Procédé et installation d'initialisation de la sécurisation d'une ligne d'une artère de transmission numérique.

(30) Priorité: **11.01.80 FR 8000622**

(43) Date de publication de la demande:
**22.07.81 Bulletin 81/29**

(45) Mention de la délivrance du brevet:
**25.05.83 Bulletin 83/21**

(84) Etats contractants désignés:
**BE CH DE GB IT LI NL**

(56) Documents cités:
**DE-B-2 556 079**
**FR-A-2 359 553**
**US-A-4 096 354**
**CABLES ET TRANSMISSION, vol. 29, no. particulier, décembre 1975 Paris FR Y. MADEC: »Caractéristiques générales d'un équipement de multiplexage numérique du second ordre TNM 1—2«, pages 261—269**

(73) Titulaire: **SOCIETE ANONYME DE TELECOMMUNICATIONS, 41, rue Cantagrel, F-75624 Paris Cedex 13 (FR)**

(72) Inventeur: **Bargeton, Gilbert L., 66, rue Servan, F-75011 Paris (FR)**
Inventeur: **Beynie, Claude P., 30, rue du Bois des Moines, F-94210 La Varenne (FR)**

(74) Mandataire: **Cabinet Martinet, 62, rue des Mathurins, F-75008 Paris (FR)**

# Procédé et installation d'initialisation de la sécurisation d'une ligne d'une artère de transmission numérique

La présente invention concerne un procédé et une installation pour initialiser la sécurisation d'une ligne normale d'une artère de transmission numérique bidirectionnelle qui comprend une pluralité de lignes normales numériques bidirectionnelles et au moins une ligne de secours numérique bidirectionnelle et qui est interconnectée entre deux stations d'extrémité. Chaque station inclut, en outre, un permutateur destiné à commuter bidirectionnellement une ligne normale avec une ligne de secours, lorsqu'un défaut de transmission dans la ligne normale est signalé à l'unité de supervision des ordres de permutation de la station.

On notera dès maintenant que l'invention a trait, plus précisément, à la procédure qui initialise la sécurisation d'une ligne normale défectueuse au sujet de laquelle on pourra se reporter pour de plus amples détails, par exemple, à l'article de A. CHOMETTE, J. GUIOMAR et M. ROBINET, intitulé »Sécurisation et supervision d'une réseau numérique urbain«, publié dans la revue française »L'Echo des Recherchens«, janvier 1979, pages 12 à 19, ou à la demande de brevet européen 80 401 703.6, déposée le 28. 11. 80 et publice le 22. 7. 81 sous le n° 0 032 327.

Une ligne normale d'une artère de transmission est composée, en toute généralité, de tronçons de ligne bidirectionnelle interconnectés à leurs extrémités communes par des terminaux de ligne. Chaque terminal de ligne a pour fonctions, outre celles attribuées à l'exploitation et à la maintenance de deux tronçons de ligne adjacents, telles que la téléalimentation et la télélocalisation des répéteurs des tronçons, celle concernant la surveillance des qualités de transmission des tronçons. A cet égard, deux détecteurs de défauts de transmission sont incorporés dans chaque terminal pour détecter les défauts relativement aux signaux numériques convoyés suivant les deux directions de transmission. Parmi ces défauts, on peut citer notamment une perte de rythme, une détection d'un taux d'erreurs supérieur à une valeur prédéterminée par vérification du code en ligne du signal numérique reçu, la perte de verrouillage de trame qui est relative aux canaux numériques multiplexés dans la ligne et contenant des signaux numériques de communications téléphoniques, de données et/ou de signalisation, l'absence du signal numérique suite à une coupure du tronçon ou au fonctionnement défectueux d'un organe, tel qu'une défaillance de son alimentation. Cet organe peut être un répéteur ou bien un multiplexeur-démultiplexeur, qui est présent lorsque certaines lignes normales issues d'une station sont multiplexées en une autre ligne normale à débit numérique plus élevé.

Lorsqu'un tel défaut est détecté, relativement à une direction de transmission, le terminal émet vers l'extrémité éloignée suivant cette direction, un signal d'indication d'alarme (S.I.A.). Le signal numérique informatif normalement convoyé par la ligne, en aval du terminal est remplacé dans tous les canaux multiplexés par le S.I.A. qui est émis en permanence jusqu'à ce que le défaut soit supprimé. Le signal d'indication d'alarme signifie au central de commutation distant, au delà de la station d'extrémité la plus proche, que la ligne normale considérée est en dérangement.

Lorsque le terminal de ligne qui a détecté un défaut est un terminal dit d'extrémité, c'est-à-dire un terminal à proximité immédiate d'une station, celui-ci délivre un signal d'alarme à l'unité de supervision des ordres de permutation de la station, à travers une liaison auxiliaire, pour initialiser la sécurisation de la ligne normale défectueuse. Cette sécurisation est effectuée d'une manière connue par un échange d'ordres entre les deux stations sur une ligne de secours libre, puis par une commutation dans les permutateurs de la ligne normale défectueuse avec une ligne de secours précédemment libre afin de ne pas interrompre pratiquement les communications téléphoniques ou les transmissions de données en cours.

Il apparaît que, selon cet art antérieur, seuls les terminaux d'extrémité peuvent initialiser la procédure de sécurisation. En d'autres termes, les défauts de transmission détectés uniquement sur les tronçons de ligne adjacents aux terminaux d'extrémité provoquent la sécurisation. Par contre, un défaut de transmission présent dans un tronçon de ligne entre deux terminaux intermédiaires, c'est-à-dire non d'extrémité, ne permet pas la sécurisation de la ligne normale, ce qui entraîne l'interruption des communications en cours.

La transmission d'un S.I.A. à travers la ligne normale fonctionnant normalement est également à considérer lorsque le tronçon en aval de la ligne, extérieur à l'artère, transmet un S.I.A. dans tous les canaux multiplexés de la ligne. Ceci à lieu l'orsqu'un organe extérieur à l'artère, tel qu'un équipement de multiplexage des canaux, détecte un défaut de transmission. Dans ce cas, la ligne normale n'est pas commutée avec une ligne de secours, puisque cette ligne normale au niveau de l'artère fonctionne normalement.

La demande de brevet français n° 2 359 553 décrit la sécurisation d'une artère de transmission numérique entre deux stations d'extrémité. L'artère ne comprend en fait que deux lignes, l'une jouant le rôle de ligne normale et l'autre de ligne de secours alternativement selon que l'une ou l'autre est défectueuse. Chaque station d'extrémité inclut un équipement de multiplexage et de démultiplexage, en tant que permutateur, et pour chacune des deux lignes, selon les deux directions de transmission, deux détecteurs de signal d'indication d'alarme interne et, pour l'ensemble des deux lignes, deux détecteurs de signal d'indication d'alarme externe.

Selon cette demande de brevet, la procédure de sécurisation de la ligne normale transmettant le signal numérique informatif est la suivante. En l'absence de défaut dans la ligne normale, c'est-à-dire en fonctionnement normal, les parties émissions des stations permettent de transférer sumultanément le signal numérique provenant de l'extérieur sur la ligne normale et sur la ligne de secours. Par contre, les parties réceptions des stations ne connectent que la ligne normale au tronçon de ligne extérieur à l'artère. Si un défaut de la ligne normale est détecté, la commutation de la ligne normale avec la ligne de secours a lieu dans les parties réceptions, afin qu'uniquement la ligne de secours retransmette le signal numérique informatif. Il en est de même lorsque la ligne normale transmet un S.I.A. et que la ligne de secours n'en transmet pas ou est défectueuse. Cependant, lorsque deux S.I.A. sont transmis par les deux lignes simultanément aucune commutation n'a lieu.

Si les deux S.I.A. sont dus à la transmission d'un S.I.A. externe et si la ligne normale n'est pas en défaut, il n'y a aucune raison de provoquer une commutation des lignes. Cependant, si la ligne normale devient défectueuse, un terminal intermédiaire de celle-ci détectant un défaut retransmettra un S.I.A. interne qui sera confondu avec le S.I.A. externe dans les stations, lesquelles ne provoqueront pas la commutation. Par conséquent, un défaut de la ligne normale en présence de la transmission d'un S.I.A. externe n'est pas signalé dans les stations d'extrémité.

Un tel inconvénient est surmonté par le procédé de surveillance d'une ligne unique de transmission numérique décrit dans la demande de brevet allemand DE-B-2 556 079, bien que celle-ci ne concerne pas la sécurisation d'une ligne normale par une ligne de secours. Cette demande de brevet a donc pour objet essentiel de détecter un défaut dans la ligne normale lorsque celle-ci reçoit de l'extérieur un S.I.A. introduit dans tous les canaux numériques multiplexés.

Selon cette demande de brevet allemand, dans l'une des stations d'extrémité recevant le S.I.A. externe, le S.I.A. est d'abord détecté puis est régénéré dans tous les canaux à l'exception du canal du mot de verrouillage de trame dans lequel est inséré un mot de signalisation particulier, par exemple par inversion de certains bits. Un défaut en ligne sera quand même détecté dans l'autre station d'extrémité par analyse du mot de signalisation particulier. Qu'un défaut soit détecté ou non, l'autre station d'extrémité retransmet vers l'extérieur de la ligne un S.I.A. dans tous les canaux, y compris dans le canal de verrouillage de trame. Ainsi la ligne est transparente à un S.I.A. externe.

La présente invention a donc pour but de fournir un procédé et une installation d'initialisation de la sécurisation de lignes normales d'une artère numérique au moyen desquels la sécurisation d'une ligne normale a lieu notamment lorsque la ligne est en défaut et reçoit un signal d'indication d'alarme provenant de l'extérieur de l'artère. En outre, cette sécurisation a lieu lorsque le défaut est détecté aussi bien par un terminal intermédiaire que par un terminal d'extrémité, sans faire appel à des liaisons auxiliaires et à des modifications de structure des terminaux existants.

Ainsi l'artère est totalement transparente à un S.I.A. externe, même si une ligne normale est en dérangement momentanné, suite par exemple à une coupure de ligne. Le défaut sera signalé aussi bien au niveau des stations d'extrémité qu'au niveau des extrémités éloignées.

A ces fins, le procédé d'initialisation de la sécurisation d'une ligne normale d'une artère de transmission numérique bidirectionnelle est caractérisé en ce que le signal d'indication d'alarme émis par un terminal d'extrémité ou par un terminal intermédiaire quelconque d'une ligne normale défectueuse initialise la commutation de cette ligne avec une ligne de secours libre, cette initialisation de commutation étant effectuée même lorsqu'un signal d'indication d'alarme provenant de l'extérieur de l'artère et relatif à ladite ligne est transmis en amont de celle-ci, et en ce qu'un signal d'indication d'alarme provenant de l'extérieur de l'artère et relativ à une ligne normale est détecté dans une station et remplacé par un signal d'inhibition de commutation qui est transmis à travers la ligne normale, ou éventuellement à travers une ligne de secours lorsque la ligne normale est défectueuse et secourue, et qui est détecté dans l'autre station, puis remplacé par un signal d'indication d'alarme transmis vers l'extérieur de l'artère relativement à l'autre station.

L'installation d'initialisation de la sécurisation d'une ligne normale numérique bidirectionnelle dans chaque station d'extrémité pour la mise en oeuvre du procédé conforme à l'invention, comprenant des premiers et seconds moyens pour détecter respectivement un signal d'indication d'alarme provenant de l'extérieur de l'artère, et un signal d'indication d'alarme transmis par un terminal d'extrémité ou intermédiaire quelconque de la ligne normale afin d'initialiser la commutation de ladite ligne normale avec une ligne de secours est caractérisée en ce qu'elle comprend des premiers moyens commandés par les premiers moyens de détection pour substituer au signal d'indication d'alarme extérieur détecté un signal d'inhibition de commutation qui est transmis à travers la ligne normale ou éventuellement à travers une ligne de secours lorsque la ligne normale est défectueuse et secourue, des moyens pour détecter un signal d'inhibition de commutation transmis par la ligne normale, et des seconds moyens commandés par les moyens de détection de signal d'inhibition de commutation pour substituer au signal d'inhibition de commutation un signal d'indication d'alarme qui est transmis vers l'extérieur de l'artère.

Selon l'invention, le critère de commutation d'une ligne normale défaillante avec une ligne de secours libre repose sur la détection ou non d'un signal d'indication d'alarme délivré par un terminal d'extrémité ou intermédiaire de la ligne normale. Notamment tout défaut détecté originaire d'un organe intermédiaire, tel qu'un multiplexeur-démultiplexeur, un relais hertzien ou analoque, initialise la sécurisation de la ligne. Cette sécurisation dépend, comme il est connu, du niveau de priorité de la ligne considérée par rapport aux autres éventuellement défaillantes et de la présence d'une ligne de secours libre lors de la détection du défaut.

Par ailleurs, les terminaux d'extrémité ne sont plus nécessairement à proximité immédiate des stations et ne sont plus reliés directement à travers des liaisons auxilliaires aux unités de supervision des ordres de permutation (ou de commutation) des stations d'extrémité. Si un défaut surgit entre un terminal d'extrémité et une station, des (seconds) moyens de détection de défauts sont prévus dans la station qui commandent également l'initialisation de la commutation de la ligne normale avec une ligne de secours.

Etant donné que tout signal d'indication d'alarme fourni par la ligne normale entre les deux stations est interprété comme une commande de commutation, la présente invention prévoit d'inhiber dans chaque station tout signal d'indication d'alarme en provenance de l'extérieur de l'artère afin d'éviter la détection de celui-ci dans l'autre station, après transmission à travers la ligne normale, comme l'art antérieur. En effet, une telle détection initialiserait une commutation indésirable d'une ligne normale apparemment fonctionnant normalement. Cependant, pour que l'autre station retransmette de nouveau le signal d'indication d'alarme en provenance de l'extérieur, il est nécessaire que la première station remplace le signal précédent par un signal dit d'inhibition de commutation S.I.C. qui est détecté dans l'autre station permettra la reconstitution d'un signal d'indication d'alarme. Vis-à-vis de l'extérieur, l'artère de transmission est ainsi transparente à tout signal d'indication d'alarme.

La présente invention sera mieux comprise à la lecture de la description qui suit, de plusieurs exemples de réalisation, et des dessins annexés correspondants, dans lesquels:

— la Fig. 1 est un bloc-diagramme schématique d'une artère de transmission numérique bidirectionnelle entre deux stations d'extrémité, montrant la disposition relative des circuits principaux de l'installation selon l'invention;

— la Fig. 2 est un bloc-diagramme détaillé d'un circuit d'indication d'alarme et d'inhibition de commutation de l'installation conforme à l'invention, relatif à une ligne normale, côté extérieur, en amont de la partie émission du permutateur d'une station d'extrémité; et

— la Fig. 3 est un bloc-diagramme détaillé d'un circuit de détection et de génération d'alarme de l'installation conforme à l'invention, relatif à une ligne normale, côté de l'artère, en amont de la partie réception du permutateur d'une station d'extrémité.

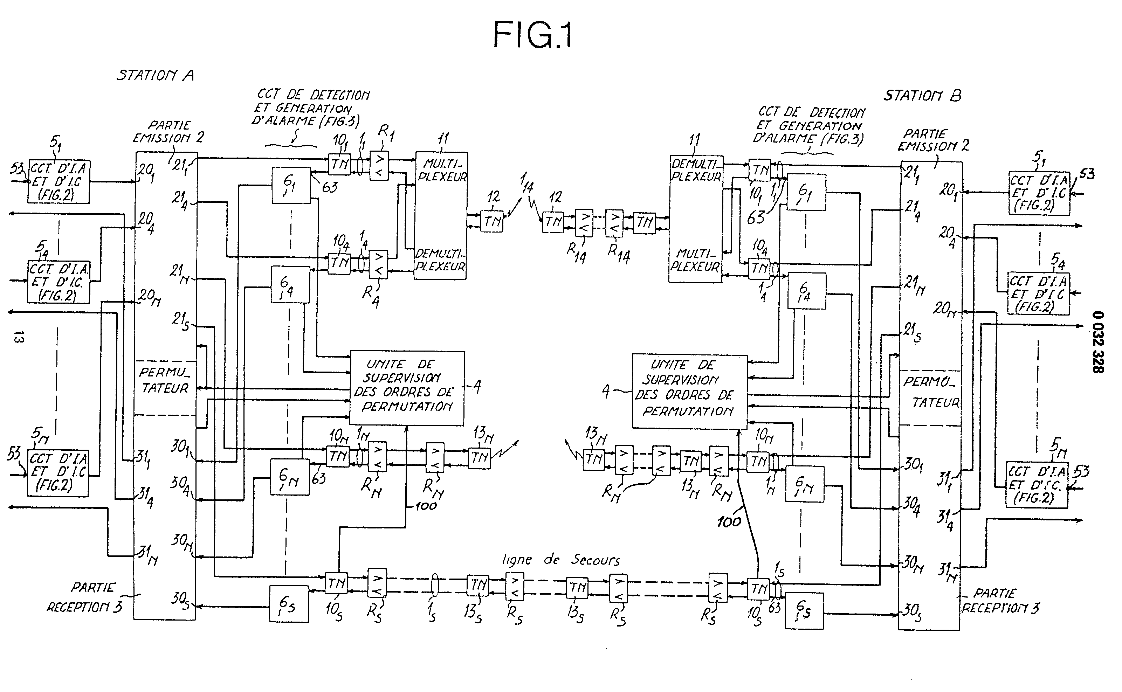

On se réfère dans la suite, à titre d'exemple non limitatif, à une artère de transmission numérique du type MIC qui est composée de $N$ lignes normales bidirectionnelles $1_1$ à $1_N$ et de $P$ lignes de secours numériques bidirectionnelles $1_S$ au débit de 2048 kbit/s. Par exemple, $N$ est égal à 19 et $P$ est égal à l'unité. Comme montré à la Fig. 1, l'artère relie deux stations d'extrémité distantes A et B. Certaines lignes normales au débit de 2048 kbit/s peuvent être multiplexées en une ligne à débit supérieur.

Selon la réalisation illustrée à la Fig. 1, relativement à chaque station A, B, les lignes normales $1_1$ à $1_4$ sont multiplexées en une ligne numérique bidirectionnelle $1_{14}$ au débit de 8848 kbit/s et la ligne normale $1_N$ relie directement les deux stations A et B. En aval de chaque station, du côté de l'artère, chaque ligne normale comporte un terminal dit d'extrémité $10_1$ à $10_N$ qui assume, relativement au tronçon de ligne du terminal précédent, les fonctions bien connues, notamment de détection de défauts suivant la direction de réception et de génération d'alarme. Ainsi les terminaux d'extrémité $10_1$ à $10_4$ des lignes normales $1_1$ à $1_4$ sont reliées, à travers un ou plusieurs tronçons de lignes incluant des répéteurs $R_1$ à $R_4$ et éventuellement d'autres terminaux dits intermédiaires, à un multiplexeur-démultiplexeur 11 multiplexant les lignes $1_1$ à $1_4$ en une ligne numérique bidirectionnelle à 8848 kbit/s. Le multiplexeur-démultiplexeur 11 est lui-même relié à un autre terminal dit intermédiaire 12 d'une liaison par câble ou voie hertzienne, comme illustré, à l'extrémité de laquelle on retrouve un autre terminal intermédiaire 12 du côté de l'autre station d'extrémité.

Pour des lignes normales telles que $1_N$ et pour les lignes de secours $1_S$, chacune d'elles peut être composée de plusieurs tronçons de ligne ayant des répéteurs $R_N$, $R_S$. Les tronçons sont interconnectés chacun entre deux terminaux intermédiaires tels que $13_N$, $13_S$. De manière générale, les tronçons de ligne entre deux terminaux peuvent être du genre à câble coaxial, à câble de fibres optiques, à paires symétriques ou à liaison hertzienne.

Du côté extérieur à l'artère de transmission, c'est-à-dire à gauche de la station A et à droite de la station B sur la Fig. 1, chaque ligne normale $1_1$ à $1_N$ peut être reliée à un multiplexeur-démultiplexeur, ou simplement à un terminal d'une ligne extérieure numérique bidirectionnelle à 2048 kbit/s. Chaque station d'extrémitré A, B comprend, outre les circuits de téléalimentation, de télélocalisation, de régénération, de maintenance et analogues, un permutateur 2—3 et une unité de supervision des ordres de permutation 4. Comme il est connu, l'unité 4 a pour rôle essentiel de détecter des signaux d'initialisation de commutation relatifs aux lignes de transmission $1_1$ à $1_N$, $1_S$ et de commander des commutations dans le permutateur entre une ligne normale défectueuse et une ligne de secours libre $1_S$ après échange d'ordres avec l'autre station distante, à travers une ligne de secours. Par exemple, lorsqu'une ligne normale telle que $1_3$ est défaillante et qu'une ligne de secours telle que $1_S$ est libre, l'unité 4 commande une commutation de telle sorte que les signaux normalement convoyés par la ligne $1_3$ sont maintenant transmis à travers la ligne de secours $1_S$, entre les deux stations A et B. A cet égard, le permutateur de chaque station d'extrémité comprend une partie émission 2 qui permet de relier sélectivement la borne de réception, côté extérieur, $20_1$ à $20_N$, d'une ligne normale aux bornes d'émission $21_1$ à $21_N$ et $21_S$ de cette ligne et des lignes de secours, côté des terminaux d'extrémité $10_1$ à $10_N$ et $10_S$ de l'artère. La partie réception 3 d'un permutateur permet les commutations selon l'autre direction de transmission , à savoir les connexions sélectives des bornes de réception $30_1$ à $30_N$ et $30_S$ d'une ligne normale et des lignes de secours, côté des terminaux d'extrémité $10_1$ à $10_N$, $10_S$ de l'artère, à la borne d'émission, côté extérieur, $31_1$ à $31_N$, de la ligne normale. L'organisation et le fonctionnement d'un permutateur 2—3 et d'une unité 4 sont conformes à ceux définis dans l'article précité, ou de préférence, conformes à ceux décrits dans la demande de brevet européen 80 401 703.6 déposée ce jour, au nom de la demanderesse.

De manière générale, selon l'art antérieur, lorsqu'un terminal tel que 10, 12, 13 détecte une anomalie de transmission, sur le tronçon quil le précède suivant une direction de transmission donnée, il émet un signal d'indication d'alarme S.I.A. sur le tronçon le succèdant selon la direction de transmission donnée. Le contenu binaire du signal d'indication d'alarme (S.I.A.) est une succession continue de »1«, conformément aux recommandations du Comité Consultatif International Télégraphique et Téléphonique (C.C.I.T.T.). Le S.I.A. remplit alors tous les canaux numériques multiplexés dans la ligne à partir de la sortie du terminal et signifie au central de commutation distant, en aval, que le service du terminal n'est plus assuré. Une action de maintenance est alors entreprise au niveau du tronçon de ligne défectueuse. L'émission du signal S.I.A. a également pour but d'éviter la détection de défauts dans les équipements de ligne situés en aval du tronçon défectueux, à l'exception de celui relatif à une perte de verrouillage de trame, puisque le S.I.A. remplit également l'intervalle de temps assigné au mot de verrouillage de trame.

Toujours selon l'art antérieur général, seuls les terminaux d'extrémité, tels que $10_1$ à $10_N$ et $10_S$ transmettent, à travers des liaisons auxiliaires, un signal d'initialisation de sécurisation à l'unité de supervision 4 de la station, simultanément à l'émission du S.I.A., en vue de secourir la ligne normale $1_1$ à $1_N$ par permutation sur une ligne de secours libre $1_S$. Par contre, dans un terminal intermédiaire tel que 12, 13, l'émission du S.I.A.,

n'engendre aucun signal d'initialisation de commutation. Par suite, des défauts de transmission détectés dans des tronçons de ligne non reliés aux terminaux d'extrémité $10_1$ à $10_N$ ne produisent aucune sécurisation de la ligne défectueuse. Par exemple, si un défaut est détecté dans le tronçon de ligne entre les terminaux 12 de la ligne $1_{14}$ ou entre deux terminaux $13_N$ de la ligne $1_N$, aucune des lignes $1_1$ à $1_4$ ou $1_N$ n'est sécurisée, ce qui provoque l'interruption des informations normalement transmises. Comme déjà dit, cet inconvénient est surmonté selon la demande de brevet français n° 2 359 553.

Conformément à l'invention, on voit que sur la Fig. 1, les terminaux d'extrémité $10_1$ à $10_N$ des lignes normales $1_1$ à $1_N$ ne transmettent plus un signal d'initialisation de commutation à l'unité 4 de la station correspondante. Seuls, les terminaux d'extrémité, tels que $10_S$, des lignes de secours $1_S$ transmettent à travers une liaison auxiliaire 100 un signal d'alarme. En effet, le procédé selon l'invention ne peut être appliqué à une ligne de secours puisque celle-ci ne peut être substituée à une autre ligne, lorsqu'elle est en panne. Ainsi l'émission d'un S.I.A. par un terminal d'extrémité $10_S$ d'une ligne de secours $1_S$ produit les mêmes effets que selon l'art antérieur.

Comme déjà dit, les critères de permutation dans une unité 4 sont fondés selon l'invention sur la détection d'un S.I.A. au niveau de la station d'extrémité. A cet égard, chaque station comprend, associés à chaque ligne normale $1_1$ à $1_N$, un circuit d'indication d'alarme et d'inhibition de commutation $5_1$ à $5_N$ et un circuit de détection et de génération d'alarme $6_1$ à $6_N$. Un circuit 5 a pour rôle essentiel d'inhiber tout effet provoqué par un S.I.A. venant de l'extérieur et qui, s'il était transmis à travers l'artère, serait interprété par l'autre station en une commande de commutation et de sécurisation de ligne. C'est pourquoi les circuits sont interconnectés en amont de la borne correspondante 20 de la partie émission 2 du permutateur. Un circuit 6 peut fournir un signal d'initialisation d'alarme, comme les terminaux d'extrémité de ligne selon l'art antérieur, afin d'ordonner la sécurisation de la ligne défectueuse sous la commande de l'unité 4. Afin de pouvoir procéder à la sécurisation de la ligne normale, dès la détection d'une anomalie et d'éviter toute émission d'un signal d'initialisation de commutation par une ligne de secours en panne, le circuit correspondant est interconnecté entre le terminal d'extrémité de ligne 10 et la borne correspondante 30 de la partie réception 3 du permutateur.

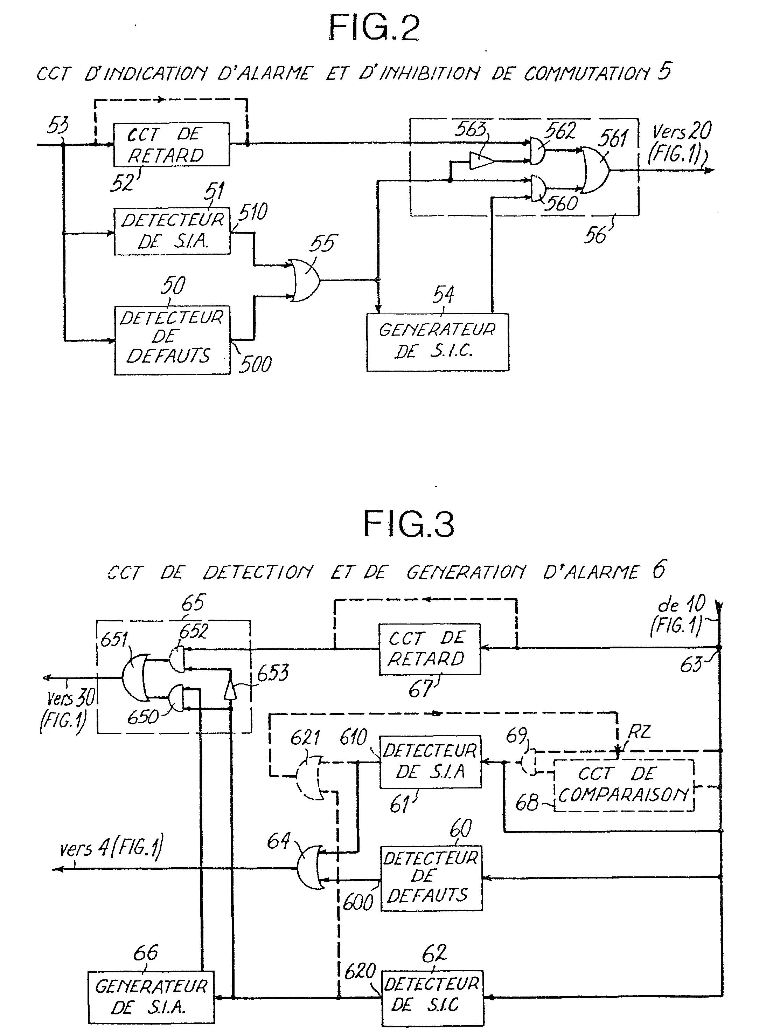

Le bloc-diagramme d'un circuit d'indication d'alarme et d'inhibition de commutation 5 est détaillé à la Fig. 2. Dans ce circuit, les entrées d'un détecteur de défauts 50, d'un détecteur de signal d'indication d'alarme 51 et d'un circuit de retard 52 sont reliées à la borne d'entrée 53 de la ligne normale correspondante 1, côté extérieur (à gauche pour la station A et à droite pour la station B sur la Fig. 1). Le détecteur 50 détecte les défauts de transmission dans le tronçon de ligne externe entre le terminal d'extrémité externe (non représenté), en amont de la borne 53 et celle-ci. Ce détecteur de défauts n'est pas indispensable lorsque le terminal d'extrémité externe est à proximité immédiate de la station d'extrémité. Le détecteur 51 détecte les signaux d'indication d'alarme qui sont émis à partir des terminaux externes en amont de la borne d'entrée 53, suite à une détection de défauts par au moins l'un d'eux. En conséquence, la détection d'un défaut par le détecteur 50 ou d'un S.I.A. par le détecteur 51 indique qu'un défaut est présent en amont de la borne 53, c'est à dire extérieurement à l'artère entre les deux stations d'extrémité A et B. Par suite, étant donné que selon le procédé de l'invention, les critères de permutation sont fondés sur la détection d'un S.I.A., il n'y a pas lieu dans ce cas de retransmetre un S.I.A. à travers la ligne de l'artère considérée sécurisée (c'est-à-dire à travers une ligne de secours) ou non vers l'autre station d'extrémité distante. En effet, ce S.I.A. déclencherait à tort une commutation. Cependant, la station d'extrémité distante doit savoir si un S.I.A. a été reçu par la station d'extrémité considérée et a été inhibé afin de reconstituer un S.I.A. et le transmettre vers l'extérieur en aval de ladite station distante.

A cet égard, le circuit 5 comprend un générateur 54 de signal d'inhibition de commutation (S.I.C.). Chaque fois qu'un défaut ou un S.I.A. est détecté par les détecteurs 50, 51, l'un d'eux commande, par mise à l'état »1« de sa sortie 500, 510, à travers une porte OU 55, l'émission d'un S.I.C. par le générateur 54. Ce S.I.C. est inséré dans tous les canaux multiplexés. Typiquement, un signal d'inhibition de commutation est composé d'une suite alternée de bits »1« et de bits »0«, telle que 1010101 . . . . . Plus généralement, un signal d'inhibition de commutation S.I.C. peut être composé d'une suite alternée de bits »1« et d'un nombre prédéterminé K (0) de bits 0. Par exemple, pour K = 2, on a S.I.C. = 1001001001 . . ., et pour K = 3, on a S.I.C. = 1000100010001 . . . . Cette suite de bits est délivrée continûment à travers une porte ET ouverte 560 et une porte OU 561 d'un circuit de commutation 56 à la borne d'entrée, côté extérieur, 20 de la partie émission 2 du permutateur, qui est attribuée à la ligne normale considérée. Tant que la sortie de la porte OU 55 est à l'état »1«, la suite alternée de bits composant le S.I.C. est continue et sera interrompue dès que le défaut signalé est supprimé. Selon la variante illustrée à la Fig. 2, le circuit 5 comprend également le circuit de retard 52 dont la sortie est reliée, à travers une porte ET 562 et la porte OU 561 du circuit de commutation 56, à la borne d'entrée correspondante, côté extérieur, 20 de la partie emission 2. Le circuit de retard 52 confère un retard au moins égal à la durée nécessaire pour provoquer l'émission d'un S.I.C. En fonctionnement normal, l'état de la sortie de la porte OU 55 est »0«, et la porte ET 562 est ouverte à travers un inverseur 563, tandis que la porte ET 560 est fermée. Dès qu'un S.I.C. est émis par le générateur 54, la porte 562 est fermée, ce qui inhibe toute transmission de S.I.A. vers la ligne normale correspondante sécurisée ou non $1_1$ à $1_N$.

En se reportant maintenant à la Fig. 3, un circuit de détection et de génération d'alarme 6 comprend un détecteur de défauts 60, un détecteur de signal d'indication d'alarme 61 et un détecteur de signal d'inhibition de commutation 62 dont les entrées communes 63 reçoivent le signal transmis par le terminal d'extrémité $10_1$ à $10_N$ correspondant à la ligne normale considérée $1_1$ à $1_N$.

Le détecteur de défauts 60 n'est pas nécessaire, par analogie avec le détecteur 50, lorsque le terminal d'extrémité 10 est à proximité immédiate de la station considérée. Cependant lorsque, par exemple, relativement aux lignes normales $1_1$ à $1_4$, le multiplexeur-démultiplexeur 11 et le terminal 12, jouant le rôle de terminal d'extrémité commun, sont à proximité immédiate de la station A, B et que les terminaux $10_1$ à $10_4$ sont supprimés, la présence du détecteur de défauts 60 permet de déceler, toute erreur ou mauvais fonctionnement concernant le démultiplexage dans le multiplexeur-démultiplexeur 11.

Le détecteur 61 détecte chaque signal d'indication d'alarme S.I.A. transmis par un terminal d'extrémité ou intermédiaire de la ligne normale considérée, selon la direction A vers B pour la station B, respectivement B vers A pour la station A. Ce S.I.A. correspond à une anomalie de transmission dans la ligne, puisque, comme déjà dit en référence à la Fig. 2, les S.I.A. en provenance de l'extérieur sont inhibés dans le circuit d'indication d'alarme et d'inhibition de commutation 5, en amont de la ligne de l'artère, selon la direction de transmission considérée. D'une manière analogue à l'effet de l'émission d'un signal d'initialisation de commutation d'un terminal d'extrémité 10 vers l'unité 4, selon l'art antérieur, la mise à l'état »1« de l'une des sorties 600, 610 des détecteurs 60, 61 signale, à travers une porte OU 64, à l'unité de supervision des ordres de permutation 4 que la ligne normale $1_1$ à $1_N$ est en défaut et doit être secourue par une ligne de secours. Cependant, cette sécurisation conforme à l'invention fait suite à la détection d'un défaut à n'importe quel endroit de la ligne normale, y compris entre deux quelconques terminaux intermédiaires tels que 12, $13_N$ (Fig. 1).

Comme déjà dit, l'apparition d'un S.I.A. à la borne d'entrée 53, côté extérieur, du circuit correspondant 5 de la station distante (Fig. 2), doit permettre la continuité de la transmission de ce S.I.A. au delà de la ligne normale de l'artère, à travers la partie réception 3 de la station considérée. Relativement à la Fig. 1, pour une ligne normale donnée, une détection de S.I.A. reçue par exemple de la droite de la station B doit faire réapparaître un S.I.A. transmis vers la gauche de la station A. Ce S.I.A. est inhibé dans l'artère entre les deux stations A et B par transmission d'un S.I.C. de la droite vers la gauche, sur la ligne normale ou sur une ligne de secours commutée, si la ligne normale est en défaut. Le détecteur 62 a pour fonction essentielle de commander la régénération de ce S.I.A. venant de l'extérieur de l'autre station distante. Afin d'éviter une génération de S.I.A. érronée vers l'extérieur, le détecteur de S.I.C. 62 ne valide un S.I.C. qu'après avoir détecté un nombre déterminé de séquences de S.I.C. pendant une durée déterminée, typiquement supérieure à la durée de l'intervalle de temps d'un canal.

Dès que le détecteur 62 détecte un signal d'inhibition d'alarme S.I.C., sa sortie 620 passe à l'état »1« pour commander un circuit de commutation 65 et un générateur de signal d'indication d'alarme 66. Un S.I.A. est délivré par le générateur 66 à l'entrée 30 de la partie de réception 3 du permutateur, correspondant à la ligne normale, à travers une porte ET ouverte 650 et une porte OU 651. La sortie du détecteur de S.I.C. 62 commande, outre l'ouverture de la porte ET 650, la fermeture d'une porte ET 652 à travers un inverseur 653.

L'entrée numérique de la porte ET 652 est reliée à la borne 63 à travers un circuit de retard 67. Le retard conféré par le circuit 67 est au moins égal à la durée nécessaire à la commande d'émission d'un S.I.A. par le générateur 66 lorsqu'un S.I.C. est détecté par le détecteur 62. Ainsi, la fermeture de la porte 652 inhibe le signal d'inhibition d'alarme détecté même, pour le substituer à un S.I.A. En l'absence de S.I.C., la sortie 620 du détecteur de S.I.C. 62 est à l'état »0«, la porte ET 650 est fermée et la porte 652 est ouverte, ce qui laisse le libre passage du signal informatif, de la borne 63 vers la partie de réception 3 du permutateur, à travers les éléments 67, 652 et 651.

Par ailleurs, si un S.I.A. est présent à la borne entrée 63 du circuit 6, pendant le retard conféré par le circuit de retard 67 peuvent avoir lieu l'échange des ordres entre les permutateurs des stations d'extrémité A et B et la commutation de la ligne normale défectueuse avec une ligne de secours libre dans les permutateurs. Par conséquent, dans le cas d'une sécurisation possible, aucun S.I.A. faisant suite à un défaut propre à la ligne n'est transmis vers l'extérieur. Au contraire, si aucune ligne de secours n'est libre pour effectuer la commutation, le S. I.A. transite à travers la partie de réception 3 et est transmis au central de commutation distant.

Selon une autre variante de l'invention, les circuits de retard 52 et 67 dans les circuits 5 (Fig. 2) et 6 (Fig. 3) sont supprimés. Ceci est illustré par les lignes en traits interrompus courts dans les Fig. 2 et 3. La borne d'entrée 53 du circuit 6 est reliée directement à l'entrée numérique de la porte ET 562 et la borne d'entrée 63 du circuit 6 est reliée directement à l'entrée numérique de la porte ET 652. Dans ce cas, le début d'un S.I.A. reçu de l'extérieur de l'artère à l'entrée 53, traverse le circuit de commutation 56 pendant la durée nécessaire à la détection d'un S.I.A. par le détecteur 51 et à la commande de la génération d'un S.I.C. par le générateur 54. Typiquement, cette durée est au plus égale à environ 125 µs. Elle correspond à la durée de transmission d'environ 250 bits à l'état »1« au début du S.I.A. pour une ligne numérique à 2048 kbit/s.

En outre, il peut arriver que l'un des canaux multiplexés transmette un S.I.A. ou un octet erroné dont les bits sont à l'état »1«. Afin d'éviter une substitution intempestive au S.I.A. d'un S.I.C., le détecteur 51 commande le générateur S.I.C. qu'après au moins avoir détecté un S.I.A. ayant une durée supérieure à la durée prédéterminée d'un canal. Il en sera de même du détecteur 61, relativement à la commande de commutation.

Dans le circuit 6, un circuit de comparaison 68 à un nombre prédéterminé est interconnecté à la borne d'entrée 63 et, à travers une porte ET 69, à l'entrée du détecteur de signal d'indication d'alarme 61. L'entrée numérique de la porte ET 69 est reliée à la borne 63. Le circuit de comparaison 68 comprend essentiellement un compteur de bits »1« qui se succèdent continûment. Le compteur est remis à zéro (RZ) à travers une porte OU 621 par le détecteur 62 dès que sa sortie 620 passe de l'état »0« à l'état »1«, correspondant à la détection d'un S.I.C. L'autre entrée de la porte OU 621 est reliée à la sortie 610 du détecteur de S.I.A. 61. Si un nombre de bits à l'état »1« au plus égal à 250 est détecté, la sortie du circuit 68 reste à l'état »zéro« et maintient fermée la porte ET 69. Aucune commutation de sécurisation ne sera commandée par le détecteur 61. Ceci est le cas, si les 250 bits ou moins sont suivis de l'émission d'un S.I.C. par le générateur 54. Dans le cas contraire, c'est-à-dire en l'absence d'un signal S.I.C., la série de »1« suivante provient alors nécessairement d'un signal d'indication d'alarme S.I.A. émis par un terminal de la ligne de l'artère. Le compteur du circuit de comparaison 68 commande l'ouverture de la porte ET 69 et corollairement une commutation possible pour la sécurisation de la ligne, dès que le compte a atteint un nombre prédéterminé égal à 250. Le compteur est remis cycliquement au compte 500 automatiquement, et est remis à zéro à travers la porte OU 621 dès que la sortie 610 du détecteur 61 passe de »1« à »0«. On notera que généralement le détecteur 61 comporte un compteur de bits »1« de faible capacité, de l'ordre de la dizaine. Ainsi, la présence du circuit de comparaison à 500 permet d'éviter toute commutation de sécurisation intempestive si le début d'un signal S.I.A. n'est pas substitué immédiatement dans un délai égal au plus à 2 × 125 µs à un S.I.C. dans le circuit correspondant 5, ou si un terminal de ligne de l'artère a émis à tort au plus 500 bits d'un S.I.A., en réponse par exemple à une perte de rythme momentanée.

Enfin, comme on le voit sur la Fig. 1, un circuit de détection et de génération d'alarme $6_S$ est également inséré entre le terminal d'extrémité $10_S$ d'une ligne de secours et la borne d'entrée, côté artère, $30_S$ de la partie réception 3 du permutateur d'une station d'extrémité.

De manière générale, le circuit $6_S$ est identique à celui précemment décrit en référence à la Fig. 3. Ceci est le cas, lorsque l'artère est sécurisée par un nombre de ligne de secours supérieur à l'unité. En effet, la détection d'une panne sur une ligne de secours qui sécurise une ligne normale en défaut, permet de commander, via le détecteur de défauts 60, par l'unité 4, une commutation de la ligne de secours en panne avec une autre ligne de secours libre. Selon certaine variante d'organisation des stations, chaque station d'extrémité comprend une pluralité de permutateurs et la ligne de secours précédente remplaçant la ligne de secours en panne peut être une ligne de secours libre d'un autre permutateur.

Par ailleurs, un tel circuit $6_S$ compartant un détecteur de S.I.C. 62 et un générateur de S.I.A. 66 est exigé pour la restitution vers l'extérieur d'un S.I.A. faisant suite à une détection d'un S.I.A. externe dans l'autre station d'extrémité et à l'émission d'un S.I.C. par le circuit 5 correspondant à travers la ligne de secours secourant la ligne normale.

Cependant, dans le cas où le nombre de ligne de secours est égal à l'unité, c'est-à-dire où la ligne de secours ne peut être sécurisée par une autre ligne de secours, il est nécessaire que le S.I.A. dû à un défaut de cette ligne de secours soit transmis vers l'extérieur de l'artère. Selon cette dernière variante, le circuit $6_S$ est supprimé ou tout au moins dans le circuit $6_S$ les éléments 61 ou 61, 64, 68, 69 et 621 sont supprimés et le détecteur de défauts 60 est relié au générateur de S.I.A. 66 ainsi qu'à l'unité 4.

Si le circuit $6_S$ est supprimé, les circuits d'indication d'alarme et d'inhibition de commutation $5_1$ à $5_N$ sont interconnectés respectivement entre les sorties 21 de la partie émission 2 du permutateur et l'entrée des terminaux d'extrémité $10_1$ à $20_N$ afin que les signaux d'inhibition de commutation ne transitent qu'à travers les lignes normales $1_1$ à $1_N$. Si une ligne normale est sécurisée, alors la ligne de secours peut convoyer un signal d'indication d'alarme S.I.A. en provenance de l'extérieur, comme selon l'art antérieur. Dans ce cas, l'unité 4 libère la ligne de secours, en réponse à la détection du S.I.A. par les équipements secours, ce qui permet de sécuriser des lignes dont les extrémités, côté extérieur, ne sont pas en panne.

## Revendications

1. Procédé d'initialisation de la sécurisation d'une ligne normale d'une artère de transmission numérique bidirectionnelle qui comprend une pluralité de lignes normales numériques bidirectionnelles $(1_1-1_N)$ et au moins une ligne de secours numérique bidirectionnelle $(1_S)$ et qui est interconnectée entre deux stations d'extrémité (A, B) propres à commuter une ligne normale défectueuse avec une ligne de secours, caractérisé en ce que le signal d'indication d'alarme émis par un terminal d'extrémité (10) ou par un terminal intermédiaire (12, 13) quelconque d'une ligne normale défectueuse $(1_1-1_N)$ initialise la commutation de cette ligne avec une ligne de secours libre $(1_S)$, cette initialisation de commutation étant effectuée même lorsqu'un signal d'indication d'alarme provenant de l'extérieur de l'artère et relatif à ladite ligne est transmis en amont (53) de celle-ci, et en ce qu'un signal d'indication d'alarme provenant de l'extérieur de l'artère et relatif à une ligne normale $(1_1-1_N)$ est détecté dans une station (A, B) et remplacé par un signal d'inhibition de commutation qui est transmis à travers la ligne normale, ou éventuellement à travers une ligne de secours $(1_S)$ lorsque la ligne normale est défectueuse et secourue, et qui est détecté dans l'autre station (B, A), puis remplacé par un signal d'indication d'alarme transmis vers l'extérieur de l'artère relativement à l'autre station (B, A).

2. Installation pour initialiser la sécurisation d'une ligne normale numérique bidirectionnelle dans chaque station d'extrémité (A, B), pour la mise en oeuvre du procédé conforme à la revendication 1, comprenant des premiers et seconds moyens (51, 61) pour détecter respectivement un signal d'indication d'alarme provenant de l'extérieur de l'artère, et un signal d'indication d'alarme transmis par un terminal d'extrémité (10) ou intermédiaire (12, 13) quelconque de la ligne normale afin d'initialiser la commutation de ladite ligne normale avec une ligne de secours $(1_S)$, caractérisé en ce qu'elle comprend des premiers moyens (54, 56) commandés par les premiers moyens de détection (51) pour substituer au signal d'indication d'alarme extérieur détecté un signal d'inhibition de commutation qui est transmis à travers la ligne normale $(1_1$ à $1_N)$ ou éventuellement à travers une ligne de secours $(1_S)$ lorsque la ligne normale est défectueuse et secourue, des moyens (62) pour détecter un signal d'inhibition de commutation transmis par la ligne normale, et des seconds moyens (65, 66) commandés par les moyens de détection de signal d'inhibition de commutation (62) pour substituer au signal d'inhibition de commutation un signal d'indication d'alarme qui est transmis vers l'extérieur de l'artère.

3. Installation conforme à la revendication 2, caractérisée en ce que les terminaux d'extrémité (10) des lignes normales $(1_1-1_N)$ à proximité d'une station (A, B) ne sont pas en relation directe avec les moyens (4) pour superviser les ordres de permutation dans la station et en ce que lesdits seconds moyens de détection de signal d'indication d'alarme (61) émettent un signal d'initialisation de commutation entre la ligne normale et une ligne de secours vers les moyens de supervision (4) en réponse à la détection d'un signal d'indication d'alarme interne.

4. Installation conforme à la revendication 2 ou 3, caractérisée en ce qu'elle comprend des premiers moyens (50) pour détecter des défauts de transmission sur un tronçon externe à l'artère, interconnecté à travers la station (A, B) à ladite ligne normale, lesdits premiers moyens de détection de défauts commandant également lesdits premiers moyens de substitution (54, 56) en réponse à la détection de tout défaut connu, à l'exception d'une absence de mot de verrouillage de trame.

5. Installation conforme à l'une des revendications 2 à 4, caractérisée en ce qu'elle comprend des seconds moyens (60) pour détecter des défauts de transmission sur le tronçon de ligne entre le terminal d'extrémité (10) voisin de la station (A, B) et cette station, les seconds moyens de détection de défauts commandant également l'initialisation de la commutation de ladite ligne normale ($1_1-1_N$) avec une ligne de secours ($1_S$) en réponse à la détection de tout défaut connu, à l'exception d'une absence de mot de verrouillage de trame.

6. Installation conforme à l'une des revendications 2 à 5, dont les lignes convoient une pluralité de canaux numériques multiplexés à division du temps, chaque canal occupant un intervalle temporel récurrent de durée prédéterminée, caractérisée en ce que les premiers (51), resp. seconds moyens (61) de détection d'un signal d'indication d'alarme commandant les premiers moyens de substitution (54, 56), resp. une commutation, en réponse à la détection d'un signal d'alarme ayant une durée supérieure à ladite durée prédéterminée.

7. Installation conforme à l'une des revendications 2 à 6, caractérisée en ce qu'elle comprend des premiers moyens (52) pour retarder le signal provenant de l'extérieur relatif à la ligne normale ($1_1-1_N$) d'une première durée au moins égale à celle nécessaire pour détecter un signal d'indication d'alarme par lesdits premiers moyens de détection (51) et pour initialiser la transmission d'un signal d'inhibition de commutation par lesdits premiers moyens de substitution (54, 56), et des seconds moyens (67) pour retarder le signal provenant de la ligne normale ($1_1-1_N$) d'une seconde durée au moins égale à celle nécessaire pour détecter un signal d'inhibition de commutation par lesdits moyens de détection du signal d'inhibition de commutation (62) et pour initialiser la transmission d'un signal d'indication d'alarme par lesdits seconds moyens de substitution (65, 66).

8. Installation conforme à la revendication 7, caractérisée en ce que la seconde durée est au moins égale à celle nécessaire pour échanger des ordres de permutation entre les deux stations d'extrémité (A, B) et pour commuter la ligne normale ($1_1-1_N$) avec une ligne de secours ($1_S$).

9. Installation conforme à l'une des revendications 2 à 6, pour laquelle un signal d'indication d'alarme est constitué par une succession continue de bits à l'état »1«, caractérisée en ce qu'elle comprend des moyens (68, 69) recevant le signal numérique convoyé par la ligne normale ($1_1-1_N$) et commandant lesdits seconds moyens de détection (61), pour compter le nombre de bits d'une suite continue de bits à l'état »1« et des moyens (68, 69) pour comparer le compte obtenu à un nombre prédéterminé supérieur au nombre de bits à l'état »1« correspondant à une première durée maximale nécessaire pour détecter un signal d'indication d'alarme par lesdits premiers moyens de détection (51) et pour initialiser la transmission d'un signal d'inhibition de commutation par lesdits premiers moyens de substitution (54, 56), lesdits moyens de comparaison (68, 69) permettant la détection d'un signal d'indication d'alarme par les seconds moyens de détection (61) lorsque le compte est supérieur audit nombre prédéterminé et lesdits moyens de comptage (62, 68) étant remis à zéro par les moyens de détection du signal d'inhibition de commutation (62) en réponse à la détection d'un signal d'inhibition de commutation.

10. Installation conforme à l'une des revendications 2 à 9, caractérisée en ce qu'un signal d'inhibition de commutation est constitué par une suite alternée continue de bits à l'état »1« et d'un nombre précéterminé K de bits à l'état »0«, telle que 1 K(0) 1 K(0) 1 K(0) . . .

## Patentansprüche

1. Verfahren für die Einleitung der Sicherung einer normalen Leitung eines numerischen Zweigübertragungskabels, das mehrere numerische Zweiweg-Normalleitungen ($1_1-1_N$) und mindestens eine numerische Zweiweg-Notleitung ($1_S$) aufweist und das zwischen zwei Endstationen (A, B), welche von einer defekten Normalleitung auf eine Notleitung umschalten können, geschaltet ist, dadurch gekennzeichnet, daß das von einem Endterminal (10) oder einem Zwischenterminal (12, 13) einer beliebigen defekten Normalleitung ($1_1-1_N$) ausgesandte Alarmsignal die Umschaltung dieser Leitung auf eine freie Notleitung ($1_S$) einleitet, wobei die Einleitung der Umschaltung auch dann eintritt, wenn ein von außerhalb des Kabels kommendes, auf die Leitung bezogenes Alarmsignal vor ihr (53) übertragen wird, und daß ein von außerhalb des Kabels kommendes und auf eine Normalleitung ($1_1-1_N$) bezogenes Alarmsignal in einer Station (A, B) festgestellt und durch ein Umschaltsperrsignal ersetzt wird, das über die Normalleitung oder gegebenenfalls über eine Notleitung ($1_S$) übertragen wird, wenn die Normalleitung defekt und ersetzt ist, und das in der anderen Station (B, A) festgestellt und durch ein Alarmsignal ersetzt wird, das nach außerhalb des Kabels, bezogen auf die andere Station (B, A) übertragen wird.

2. Einrichtung für die Einleitung der Sicherung einer numerischen Zweiweg-Normalleitung in jeder Endstation (A, B) zur Ausführung des Verfahrens nach Anspruch 1, mit ersten und zweiten Detektoreinrichtungen (51, 61) für die Feststellung eines von außerhalb des Kabels kommenden Alarmsignals bzw. eines von einem Endterminal (10) oder einem Zwischenterminal (12, 13) einer beliebigen Normalleitung übertragenen Alarmsignals, um die Umschaltung der Normalleitung auf die Notleitung ($1_S$) einzuleiten, gekennzeichnet durch erste, von der ersten Detektoreinrichtung (51) gesteuerte Substitionseinrichtungen (54, 56) zum Ersetzen des abgetasteten äußeren Alarmsignals durch ein Umschaltsperrsignal, das über die Normalleitung ($1_1$–$1_N$) oder gegebenenfalls über eine Notleitung ($1_S$) übertragen wird, wenn die Normalleitung defekt und ersetzt ist, durch Detektoreinrichtungen (62) zum Feststellen eines über die Normalleitung übertragenen Umschaltsperrsignals, und durch zweite, von den Detektoreinrichtungen (62) für das Umschaltsperrsignal gesteuerte Substitutionsrichtungen (65, 66), welche das Umschaltsperrsignal durch ein Alarmsignal ersetzen, das nach außerhalb des Kabels übertragen wird.

3. Einrichtung nach Anspruch 2, dadurch gekennzeichnet, daß die Endterminals (10) der Normalleitungen ($1_1$–$1_N$) in der Nähe einer Station (A, B) nicht in direkter Beziehung mit den Überwachungseinrichtungen (4) für die Überwachung der Permutationsreihenfolgen in der Station stehen, und daß die zweiten Detektoreinrichtungen für das Alarmsignal (61) ein Auslösesignal für die Umschaltung zwischen der Normalleitung und einer Notleitung an die Überwachungseinrichtungen (4) in Abhängigkeit von der Abtastung eines internen Alarmsignals senden.

4. Einrichtung nach Anspruch 2 oder 3, gekennzeichnet durch erste Fehlererkennungseinrichtungen (50) für das Feststellen von Übertragungsfehlern auf einem kabelexternen Abschnitt, der über die Station (A, B) mit der Normalleitung verbunden ist, wobei die ersten Fehlererkennungseinrichtungen auch die ersten Substitutionseinrichtungen (54, 56) in Abhängigkeit von der Feststellung eines beliebigen bekannten Fehlers steuern, ausgenommen bei Abwesenheit eines Rahmenverriegelungswortes.

5. Einrichtung nach einem der Ansprüche 2 bis 4, gekennzeichnet durch zweite Fehlererkennungseinrichtungen (60) für die Feststellung von Übertragungsfehlern auf dem Leitungsabschnitt zwischen dem der Station (A, B) benachbarten Endterminal (10) und dieser Station, wobei die zweiten Fehlererkennungseinrichtungen auch die Einleitung der Umschaltung der Normalleitung ($1_1$–$1_N$) auf eine Notleitung ($1_S$) in Abhängigkeit von der Feststellung eines beliebigen, bekannten Fehlers steuern, ausgenommen bei der Abwesenheit eines Raster-Verriegelungswortes.

6. Einrichtung nach einem der Ansprüche 2 bis 5, deren Leitungen mehrere zeitmultiplex betriebene, numerische Kanäle enthalten, wobei jeder Kanal ein wiederkehrendes zeitliches Intervall mit bestimmter Zeitdauer besetzt, dadurch gekennzeichnet, daß die ersten (51) bzw. zweiten Detektoreinrichtungen (61) für die Feststellung eines Alarmsignals die ersten Substitutionseinrichtungen (54, 56) bzw. eine Umschaltung in Abhängigkeit von der Feststellung eines Alarmsignals steuern, das eine größere Zeitdauer als die vorbestimmte Zeitdauer aufweist.

7. Einrichtung nach einem der Ansprüche 2 bis 6, gekennzeichnet durch erste Verzögerungseinrichtungen (52) für die Verzögerung des bezüglich der Normalleitung ($1_1$–$1_N$) von außen kommenden Signals um eine erste Zeitdauer, die mindestens gleich der für die Feststellung eines Alarmsignals durch die ersten Detektoreinrichtungen (51) ist, und für das Einleiten der Übertragung eines Umschaltsperrsignals durch die ersten Substitutionseinrichtungen (54, 56), sowie durch zweite Verzögerungseinrichtungen (67) für die Verzögerung des von der Normalleitung ($1_1$–$1_N$) kommenden Signals um eine zweite Zeitdauer, die mindestens gleich der Zeitdauer für die Feststellung eines Umschaltsperrsignals durch die Detektoreinrichtungen (62) für das Umschaltsperrsignal ist, und für die Einleitung der Übertragung eines Alarmsignals durch die zweiten Substitutionseinrichtungen (65, 66).

8. Einrichtung nach Anspruch 7, dadurch gekennzeichnet, daß die zweite Zeitdauer mindestens gleich der zum Austauschen der Permutationsordnungen zwischen den beiden Endstationen (A, B) und zum Umschalten der Normalleitung ($1_1$–$1_N$) auf eine Notleitung ($1_S$) benötigten Zeitdauer ist.

9. Einrichtung nach einem der Ansprüche 2 bis 6, bei welcher ein Alarmsignal von einer kontinuierlichen Bitfolge mit dem Zustand »1« gebildet wird, gekennzeichnet durch Zähleinrichtungen (68, 69), die das von der Normalleitung ($1_1$–$1_N$) übermittelte numerische Signal empfangen und die zweiten Detektoreinrichtungen (61) steuern, um die Bitanzahl einer kontinuierlichen Bitfolge mit dem Zustand »1« zu zählen, und durch Vergleichseinrichtungen (68, 69) für das Vergleichen des Zählergebnisses mit einer vorbestimmten Zahl, die größer ist als eine Anzahl von Bits mit dem Zustand »1«, die einer ersten maximalen Zeitdauer, die für das Feststellen eines Alarmsignals durch die ersten Detektoreinrichtungen (51) benötigt wird, entspricht, und für das Einleiten der Übertragung eines Umschaltsperrsignals durch die ersten Substitutionseinrichtungen (54, 56), wobei die Vergleichseinrichtungen (68, 69) die Feststellung eines Alarmsignals durch die zweiten Detektoreinrichtungen (61) erlauben, wenn das Zählergebnis größer ist als die vorbestimmte Zahl, und die Zähleinrichtungen (62, 68) durch die Detektoreinrichtungen für das Umschaltsperrsignal (62) in Abhängigkeit von der Feststellung eines Umschaltsperrsignals auf Null zurückgestellt sind.

10. Einrichtung nach einem der Ansprüche 2 und 9, dadurch gekennzeichnet, daß ein Umschaltsperrsignal durch eine alternierende kontinuierliche Folge von Bits mit dem Zustand »1« und einer vorbestimmten Anzahl K von Bits mit dem Zustand »0« gebildet wird, z. B. 1 K(0) 1 K(0) 1 K(0) . . .

### Claims

1. Process for triggering relief of a working line in a bidirectional digital transmission link that includes a plurality of bidirectional digital working lines ($1_1-1_N$) and at least a bidirectional digital spare lines ($1_S$) and that is interconnected between two end stations (A, B) adapted to switch-over a faulty working line with a spare line, characterized in that the alarm indication signal delivered from an end terminal (10) or from any intermediate terminal (12, 13) of a faulty working line ($1_1-1_N$) triggers the switch-over said line with a free spared line ($1_S$), said triggering of the switch-over being accomplishing even when an alarm indication signal derived from outside of the link and relative to said line is transmitted upstream (53) of said line, and in that an alarm indication signal derived from outside of the link and relative to a working line ($1_1-1_N$) is detected in a station (A, B) and replaced by a switching inhibition signal that is transmitted through the working line, or eventually through a spare line ($1_S$) when the working line has failed and been relieved, and that is detected in the other station (B, A), then replaced by an alarm indication signal transmitted outside of the link with respect to the other station (B, A).

2. Arrangement for triggering relief of a bidirectional digital workung line in each end station (A, B), designed for carrying out the process according to claim 1, comprising first and second means (51, 61) for respectively detecting an alarm indication signal derived from outside of the link, and an alarm indication signal delivered from an end terminal (10) or any intermediate terminal (12, 13) of the working line thereby triggering switch-over said working line with a spare line ($1_S$), characterized in that it comprises first means (54, 56) controlled by the first detecting means (51) for replacing the detected outside alarm indication signal by a switching inhibition signal which is tranmitted through the working line ($1_1$ to $1_N$) or eventually through a spare line ($1_S$) when the working line has failed and been relieved, means (62) for detecting a switching inhibition signal transmitted on the working line, and second means (65, 66) controlled by the switching inhibition signal detecting means (62) for replacing the switching inhibition signal by an alarm indication signal that is transmitted outside of the link.

3. Arrangement according to claim 2, characterized in that the end terminals (10) of the working lines ($1_1-1_N$) in the vicinity of a station (A, B) are not in direct relationship with the means (4) for monitoring the switch-over orders in the station and in that said second alarm indication signal detecting means (61) delivers a signal for triggering switch-over between the working line and a spare line to the monitoring means (4) in response to the detection of an inside alarm indication signal.

4. Arrangement according to claim 2 or 3, characterized in that it comprises first means (50) for detecting transmission faults on a section outside the link, interconnected to said working line through the station (A, B), said first fault detecting means also controlling said first replacing means (54, 56) in response to the detection of any known fault, except for an absence of frame alignment word.

5. Arrangement according to any one of claims 2 to 4, characterized in that it comprises second means (60) for detecting transmission faults on the line section between the end terminal (10) neighbouring with the station (A, B) and said station, the second fault detecting means also controlling the triggering of the switch-over said working line ($1_1-1_N$) with a spare line ($1_S$) in response to the detection of any known fault, except for an absence of frame alignment word.

6. Arrangement according to any one of claims 2 to 5, whose lines convey a plurality of time-division multiplexed digital channels, each channel being assigned to a recurrent time interval having a predetermined duration, characterized in that the first (51), respectively second (61) alarm indication signal detecting means controls the first replacing means (54, 56), respectively a switch-over, in response to the detection of an alarm signal having a duration greater than said predetermined duration.

7. Arrangement according to any one of claims 2 to 6, characterized in that it comprises first means (52) for delaying the signal coming from the outside relative to the working line ($1_1-1_N$) by a first duration at least equal to that required by said first detecting means (51) to detect an alarm indication signal and by said first replacing means (54, 56) to trigger the transmission of a switching inhibition signal, and second means (67) for delaying the signal coming from the working line ($1_1-1_N$) by a second duration at least equal to that required by said switching inhibition signal detecting means (62) to detect a switching inhibition signal and by said second replacing means (65, 66) to trigger the transmission of an alarm indication signal:

8. Arrangement according to claim 7, characterized in that the second duration is at least equal to that required for exchanging switch-over orders between the two end stations (A, B) and for switching-over the working line ($1_1-1_N$) with a spare line ($1_S$).

9. Arrangement according to any one of claims 2 to 6, wherein an alarm indication signal is made up of a continuous stream of bits having binary state »1«, characterized in that it comprises means (68, 69) receiving the digital signal conveyed on the working line $(1_1—1_N)$ and controlling said second detecting means (61) for counting the number of bits in a continuous stream of bits in the binary state »1« and means (68, 69) for comparing the obtained count with a predetermined number greater than the number of bits in the binary state »1« corresponding to a first maximum duration required by said first detecting means (54, 56) to trigger the transmission of a switching inhibition signal, said comparing means (68, 69) enabling the detection of a second alarm indication signal by the second detecting means (61) when the count is more than said predetermined number, and said counting means (62, 68) being reset to zero by the switching inhibition signal detecting means (62) in response to the detection of a switching inhibition signal.

10 Arrangement according to any one of claims 2 to 9, characterized in that a switching inhibition signal is composed of a continuous alternate stream of bits in the binary state »1« and a predetermined number K of bits in the binary state »0« such as 1 K(0) 1 K(0) 1 K(0) . . .

FIG.1

0 032 328

# FIG.2

CCT D'INDICATION D'ALARME ET D'INHIBITION DE COMMUTATION 5

53

CCT DE RETARD
52

DETECTEUR DE S.I.A.
51    510

DETECTEUR DE DEFAUTS
50    500

55

563    562    561    Vers 20 (FIG.1)
560
56

GENERATEUR DE S.I.C.
54

# FIG.3

CCT DE DETECTION ET DE GENERATION D'ALARME 6

de 10 (FIG.1)

65
651    652
653
Vers 30 (FIG.1)
650

CCT DE RETARD
67

63

621    610    DETECTEUR DE S.I.A    61
69    RZ
68    CCT DE COMPARAISON

vers 4 (FIG.1)
64    600

DETECTEUR DE DEFAUTS    60

66    GENERATEUR DE S.I.A.
620    62    DETECTEUR DE S.I.C

15